# EUROPEAN PATENT APPLICATION

(11) **EP 4 789 760 A1**
(43) Date of publication of application: **12.08.2026**
(21) Application number: 24874606.7
(22) Date of filing: 01.10.2024
(51) Int. Cl.: B01J 23/42, B01J 23/89, B01J 37/04, B01J 37/08, B01J 37/16, H01M 4/88, H01M 4/90, H01M 4/92, H01M 4/96, H01M 8/10

(54) **PLATINUM- OR PLATINUM ALLOY-SUPPORTING CARBON CATALYST AND METHOD FOR PRODUCING SAME, MEMBRANE ELECTRODE ASSEMBLY FOR SOLID POLYMER FUEL CELL USING PLATINUM- OR PLATINUM ALLOY-SUPPORTING CARBON CATALYST, AND SOLID POLYMER FUEL CELL**

(30) Priority: 03.10.2023 JP 2023171974
(71) Applicant: Ishifuku Metal Industry Co., Ltd., Chiyoda-ku, Tokyo 101-8654 (JP)
(72) Inventor: ITO, Tatsuyoshi, Soka-shi, Saitama 340-0002 (JP); AOKI, Naoya, Soka-shi, Saitama 340-0002 (JP); KOGA, Kazunori, Soka-shi, Saitama 340-0002 (JP); KISHI, Ryoji, Soka-shi, Saitama 340-0002 (JP); KOBAYASHI,Daiki, Soka-shi, Saitama 340-0002 (JP); NAKAE, Ryosuke, Soka-shi, Saitama 340-0002 (JP)
(74) Representative: Kraus & Lederer PartGmbB
(86) International application number: PCT/JP2024/035123
(87) International publication number: WO 2025/075005

(57) **Abstract**

[Problem]

To provide a highly active and highly durable platinum- or platinum alloy-supporting carbon catalyst for solid polymer fuel cells.

[Solution]

A platinum or platinum alloy-supporting carbon catalyst in which platinum particles or platinum alloy particles are supported on mesoporous carbon, the platinum or platinum alloy-supporting carbon catalyst being characterized in that: the platinum or platinum alloy support rate in the catalyst is 30 -70% on a weight basis per the total weight of the catalyst; the total weight of platinum particles or platinum alloy particles supported outside the pores of the mesoporous carbon is 60 - 90% with respect to the total weight of the platinum particles or platinum alloy particles; the average particle diameter D1 of the platinum particles or platinum alloy particles supported in the pores of the mesoporous carbon is the same as or larger than the average particle diameter D2 of the platinum particles or platinum alloy particles supported outside the pores of the mesoporous carbon; and the average particle diameter D1 and the average particle diameter D2 are each independently 2 - 8 nm.

## Description

### Technical Field

The present invention relates to a highly active and highly durable platinum or platinum alloy-supported carbon catalyst for a solid polymer fuel cell in which platinum particles or platinum alloy particles are supported inside and outside the pore of a support.

### Background Art

In recent years, decarbonization and carbon neutral have been cited as measures against energy and environmental problems, and the use of hydrogen has attracted attention as a clean energy alternative to chemical fuels. A fuel cell that generates power by chemically reacting hydrogen and oxygen does not emit carbon dioxide, which is a greenhouse gas, and thus is expected as a new power generation system that contributes to carbon neutral. Among them, a solid polymer fuel cell (PEFC), which is one of the fuel cells, uses a solid polymer ion conductive membrane for an electrolyte layer, and has an operation temperature as low as from normal temperature to 100°C, so that the device can be downsized; therefore, the solid polymer electrolyte fuel cell has been promoted to practical use as a power source for electric vehicles or a stationary power source.

A solid polymer fuel cell has a cell stack structure in which a plurality of unit cells are stacked with a membrane electrode assembly (MEA) sandwiched between separators. The MEA has a structure in which an electrolyte layer is sandwiched between two electrode catalyst layers including an electrode catalyst and an electrolyte polymer (ionomer).

In the MEA, the following electrochemical reaction proceeds, and power generation occurs. First, hydrogen supplied as a fuel is oxidized by an electrode catalyst in a fuel electrode (anode) side electrode catalyst layer to become protons and electrons. Next, the generated protons pass through an electrolyte layer made of an ionically conductive electrolyte, and one electron passes through an external circuit to reach an oxygen electrode (cathode) side electrode catalyst layer. The proton and the electron reached the electrode catalyst layer on the cathode side react with oxygen fed on the cathode side to form water. When the electrons generated at the anode side electrode move to the cathode side electrode via the external circuit, the electrons are used as electric energy.

As a known electrode catalyst, a platinum or platinum alloy-supported carbon catalyst in which such as platinum (Pt) or a platinum alloy are supported on a carbon black nanoparticles support having high electron conductivity is used. In the platinum or platinum alloy-supported carbon catalyst, high specific surface area carbon is used to support platinum particles or platinum alloy particles in a highly dispersed state without aggregation, whereby an electrode reaction area on a surface of the platinum particles or platinum alloy particles can be increased to achieve sufficient activity with a small amount of platinum or platinum alloy supported.

In order to popularize a fuel cell vehicle (FCV) for achieving carbon neutral, it is required to develop a cathode catalyst for a solid polymer fuel cell (PEFC) capable of performing high-efficiency and high-load operation.

Cited Document 1 discloses a platinum-supported carbon catalyst supported on solid structure carbon in which the inside of particles is clogged, such as furnace black or acetylene black.

Cited Document 2 discloses an electrode catalyst in which platinum particles are supported in pores of a porous hollow carbon support such as Ketjen black. It is mentioned that adsorption of an ionomer to the surface of the platinum particles is suppressed by supporting the platinum particles in the pores, and a decrease in an effective reaction surface area of the platinum particles can be prevented.

### Citation List

### Patent Documents

Patent Document 1: JP 2007-112660 A
Patent Document 2: JP 2013-109856 A

### Summary of Invention

### Technical Problem

For example, a platinum-supported carbon catalyst supported on solid structure carbon in which the inside of particles is clogged, such as furnace black or acetylene black, has excellent material transport properties because platinum particles are supported on the surface of a support, a reaction gas easily comes into contact with the platinum particles, and the reaction easily proceeds; however, since the platinum particles are on the surface of the support, there are problems of activity reduction due to ionomer poisoning and catalyst deterioration due to aggregation (sintering) of the platinum particles.

On the other hand, platinum-supported carbon catalysts in which porous carbon such as Ketjen black is used as a support and platinum particles are supported in the pores of the support are also widely used. Since the platinum particles are supported inside the pores of the support, ionomer poisoning is reduced, and a decrease in catalytic activity is suppressed. However, although the activity of the platinum particles supported inside the pores is high, there is a problem that access of protons and a reaction gas is limited.

Thus, there is a demand for a method of supporting platinum particles or platinum alloy particles inside and outside the pores of the support at an arbitrary ratio. In addition, if the platinum particles or the platinum alloy particles can be supported at an arbitrary ratio between the inside and outside of the pores of the support, it is possible to selectively support the platinum particles or the platinum alloy particles inside and outside of the pores to impart a catalytically active component having a different function, and thus to adjust the performance.

An object of the present invention is to provide a platinum or platinum alloy-supported carbon catalyst having high initial activity and excellent durability by selectively supporting platinum particles or platinum alloy particles inside and outside the pores of a carbon support.

### Solution to Problem

The present inventors have found that the supported amount and particle size of the platinum particles or platinum alloy particles to be supported inside and outside the pores of a support can be controlled by adopting a two-stage supporting step including supporting the platinum particles or platinum alloy particles in the pores of the carbon support by an impregnation method and supporting the platinum particles or platinum alloy particles outside the pores of the carbon support by a liquid phase reduction method.

That is, the present invention is a platinum or platinum alloy-supported carbon catalyst in which platinum particles or platinum alloy particles are supported on mesoporous carbon, and is a platinum or platinum alloy-supported carbon catalyst characterized in that a platinum or platinum alloy supporting rate in the catalyst is 30% or more and 70% or less per total weight of the catalyst on a weight basis, a total weight of the platinum particles or platinum alloy particles supported outside pores of the mesoporous carbon relative to the total weight of the platinum particles or platinum alloy particles is from 60 to 90%,
the average particle diameter D1 of the platinum particles or platinum alloy particles supported in the pores of the mesoporous carbon is the same as or larger than an average particle diameter D2 of the platinum particles or the platinum alloy particles supported outside the pores of the mesoporous carbon, and
the average particle diameter D1 and the average particle diameter D2 are each independently 2 nm or more and 8 nm or less.

In the above configuration, the average particle diameter D1 may be 2.5 nm or more and 8 nm or less, the average particle diameter D2 may be 2.3 nm or more and 7.3 nm or less, and D1/D2 may be from 1.0 to 2.1.

The production method of the present invention relates to a method for producing a platinum-supported carbon catalyst, the method comprising:
an in-pore supporting step of supporting platinum in pores of a mesoporous carbon support, the in-pore supporting step comprising a step of impregnating a mesoporous carbon support with a platinum compound-containing aqueous solution, a step of drying under reduced pressure the mesoporous carbon support impregnated with the platinum compound-containing aqueous solution prepared in the impregnation step, and a step of heat-treating the mesoporous carbon support dried under reduced pressure, prepared in the step of drying under reduced pressure, in a reducing atmosphere, and
an extra-pore supporting step of supporting platinum particles outside the pores of the mesoporous carbon support, the extra-pore supporting step comprising a step of suspending the mesoporous carbon support in which platinum is supported in the pores after the in-pore supporting step in an aqueous solution, and a step of mixing the suspension, the platinum compound-containing aqueous solution, and a liquid comprising a reducing agent and reducing the platinum compound.

The in-pore supporting step may comprise a step of adding a dinitrodiamine platinum nitric acid aqueous solution to the mesoporous carbon support and mixing them to prepare a platinum-supporting carbon slurry, a step of drying the prepared slurry at a predetermined temperature under reduced pressure to prepare a solidified product, a step of performing heat treatment in a reducing atmosphere to reduce dinitrodiamine platinum, and a step of firing (firing temperature T1) in an inert gas atmosphere to grow platinum particles, and the extra-pore supporting step may comprise a step of suspending the mesoporous carbon carrier in which platinum is supported in the pores after the in-pore supporting step in a nitric acid aqueous solution, and heating and stirring the suspension, a dinitrodiamine platinum nitric acid aqueous solution, and a liquid comprising L-ascorbic acid at from 80°C to 100°C for from 30 minutes to 5 hours to support the platinum particles outside the pores of the carbon support, and a step of filtering platinum-supported carbon having the platinum particles supported outside the pores of the carbon support in the supporting step, then washing the platinum-supported carbon, drying the platinum-supported carbon, and then firing (firing temperature T2) the platinum-supported carbon in an inert gas atmosphere to grow the platinum particles.

The production method may comprise a step of adding an aqueous solution comprising a compound of a metal to be alloyed with the platinum to the platinum supported carbon catalyst and mixing them to prepare a slurry, a step of heating and drying the prepared slurry under reduced pressure to prepare a solidified product, and an alloying step of firing the solidified product in an inert gas atmosphere after pretreating and firing the solidified product in a reducing atmosphere and performing an alloying treatment.

In the production method, each of the firing temperature T1 and the firing temperature T2 may be set to a predetermined temperature to control an average particle diameter D1 of the platinum particles and an average particle diameter D2 of the platinum particles.

### Advantageous Effects of Invention

According to the present invention, it is possible to provide a platinum or platinum alloy-supported carbon catalyst having high initial activity and excellent durability by selectively supporting platinum particles or platinum alloy particles inside and outside pores of a carbon support.

### Description of Embodiments

The production method of the present invention will be disclosed first.

The production method of the present invention is a method for producing a platinum-supported carbon catalyst, the method comprising an in-pore supporting step of supporting platinum in pores of a mesoporous carbon support, the in-pore supporting step comprising a step of impregnating a mesoporous carbon support with a platinum compound-containing aqueous solution, a step of drying under reduced pressure the mesoporous carbon support impregnated with the platinum compound-containing aqueous solution prepared in the impregnation step, and a step of heat-treating the mesoporous carbon support dried under reduced pressure, prepared in the step of drying under reduced pressure, in a reducing atmosphere, and
an extra-pore supporting step of supporting platinum particles outside the pores of the mesoporous carbon support, the extra-pore supporting step comprising a step of suspending the mesoporous carbon support in which platinum is supported in the pores after the in-pore supporting step in an aqueous solution, and a step of the suspension, the platinum compound-containing aqueous solution, and a liquid comprising a reducing agent and reducing the platinum compound.

According to the production method of the present invention, in the above production method, the in-pore supporting step may further comprise a step of adding a dinitrodiamine platinum nitric acid aqueous solution to the mesoporous carbon support and mixing them to prepare a platinum-supported carbon slurry, a step of drying the prepared slurry at a predetermined temperature under reduced pressure to prepare a solidified product, a step of performing heat treatment in a reducing atmosphere to reduce dinitrodiamine platinum, and a step of firing (firing temperature T1) in an inert gas atmosphere to grow platinum particles, and the extra-pore supporting step may comprise a step of suspending the mesoporous carbon support in which platinum is supported in the pores after the in-pore supporting step in a nitric acid aqueous solution, and heating and stirring the suspension, a dinitrodiamine platinum nitric acid aqueous solution, and a liquid comprising L-ascorbic acid at from 80°C to 100°C for from 30 minutes to 5 hours to support the platinum particles outside the pores of the carbon support, and a step of filtering platinum-supported carbon having the platinum particles supported outside the pores of the carbon carrier in the supporting step, then washing the platinum- supported carbon, drying the platinum-supported carbon, and then firing (firing temperature T2) the platinum-supported carbon in an inert gas atmosphere to grow the platinum particles.

When the catalytically active component (for example, platinum) is supplied with a solution and supported on a support, the case is called impregnation, and the catalytically active component (for example, platinum) is easily supported in the pores of the carrier. In the production method of the present invention, the catalytically active component (for example, platinum) is supported in the pores of the support by an impregnation method, and then the catalytically active component (for example, platinum) is supported outside the support pores by a liquid phase reduction method. In the production method of the present invention, these two-stage supporting steps are adopted.

As the platinum-containing aqueous solution, a dinitrodiamine platinum nitric acid aqueous solution, a chloroplatinic acid aqueous solution, or the like can be used.

Mesoporous carbon is used for the support. The mesoporous carbon is a carbon material having nanometer-order pores. In the platinum or platinum alloy-supporting carbon catalyst of the present invention, mesoporous carbon having various pore volumes and specific- surface-areas can be used.

In the extra-pore supporting step, L-ascorbic acid, citric acid, or the like can be used as the reducing agent. In the extra-pore supporting step, an alcohol-based solvent may be added to the nitric acid aqueous solution as a dispersion solvent. As the alcohol-based solvent, ethanol, 2-propanol, or the like can be used.

As the inert gas, nitrogen, argon, or the like can be used.

Hereinafter, the platinum particles or platinum alloy particles supported in the pores of the support are referred to as first platinum particles or platinum alloy particles, and the platinum particles or platinum alloy particles supported outside the pores of the support are referred to as second platinum particles or platinum alloy particles.

The step of supporting platinum in the pores of the mesoporous carbon support is, for example, as follows. A dinitrodiamine platinum nitric acid aqueous solution is added to the mesoporous carbon support and mixed to prepare a platinum-supported carbon slurry, and then the platinum-supported carbon slurry is dried at a predetermined temperature under reduced pressure to prepare a solidified product. The prepared solidified product is heat-treated in a reducing atmosphere to reduce dinitrodiamine platinum, and is fired (firing temperature T1) in an inert gas (for example, nitrogen) atmosphere to grow the platinum particles, thereby preparing in-pore first platinum particle-supported carbon.

The extra-pore supporting step is, for example, as follows. The in-pore first platinum particle-supported carbon is suspended in a nitric acid aqueous solution, and the suspension, a dinitrodiamine platinum nitric acid aqueous solution, ethanol, and L-ascorbic acid are added and mixed. Next, the mixture is heated and stirred at from 80°C to 100°C for from 30 minutes to 5 hours. For example, by heating this mixture at 90°C for 1 hour using a reflux reactor, dinitrodiamine platinum is subjected to liquid phase reduction, and the platinum particles are supported outside the pores of the carbon support.

Platinum-supported carbon having the second platinum particles supported outside the pores of the carbon support supporting is filtered off, then washed, dried, and then fired (firing temperature T2) in an inert gas atmosphere to grow the platinum particles, thereby preparing a platinum-supported carbon catalyst having the platinum particles selectively supported inside and outside the pores of the carbon support.

After the above filtration, washing, and drying and before firing (firing temperature T2) in an inert gas atmosphere, a residue of the reducing agent (L-ascorbic acid) that has not been removed by the washing may be thermally decomposed and removed by heat treatment in an oxygen-free atmosphere. An example of the oxygen-free atmosphere can be 4.0% hydrogen/nitrogen.

The production method of the present invention may comprise a step of adding an aqueous solution comprising a compound of a metal to be alloyed with the platinum to the platinum-supported carbon catalyst and mixing them to prepare a slurry, a step of heating and drying the prepared slurry under reduced pressure to prepare a solidified product, and an alloying step of firing the solidified product in an inert gas atmosphere after pretreating and firing the solidified product in a reducing atmosphere and performing an alloying treatment.

For example, an aqueous cobalt nitrate solution obtained by, for example, dissolving cobalt (II) nitrate hexahydrate in water is added to the platinum-supported carbon catalyst prepared by the above method, and the mixture is mixed using a kneader to prepare a slurry. The prepared slurry is dried, for example, at from 80°C to 250°C under reduced pressure for from 1 hour to 15 hours using a vacuum dryer to prepare a solidified product. This solidified product is reduced in an atmosphere furnace at from 200°C to 600°C for from 1 to 5 hours in a mixed atmosphere of hydrogen/nitrogen, and fired at from 700 to 900°C for from 0.5 to 5 hours under a flow of an inert gas to perform an alloying treatment. Thereafter, excess cobalt is removed by acid washing. Thereafter, filtration and washing are performed, and drying is performed to prepare a platinum cobalt-supported carbon catalyst.

In the production method of the present invention, each of the firing temperature T1 and the firing temperature T2 may be set to a predetermined temperature to control an average particle diameter D1 of the platinum particles and an average particle diameter D2 of the platinum particles.

The temperature firing temperature T1 and the firing temperature T2 can be, for example, from 500°C to 1000°C. By firing at from 500°C to 1000°C, the platinum particles can be made to have a predetermined size.

Next, a catalyst of the present invention is a platinum or platinum alloy-supported carbon catalyst in which platinum particles or platinum alloy particles are supported on mesoporous carbon, and is a platinum or platinum alloy-supported carbon catalyst characterized in that a platinum or platinum alloy supporting rate in the catalyst is 30% or more and 70% or less per total weight of the catalyst on a weight basis, a total weight of the platinum particles or platinum alloy particles supported outside pores of the mesoporous carbon relative to the total weight of the platinum particles or platinum alloy particles is from 60 to 90%,
the average particle diameter D1 of the platinum particles or platinum alloy particles supported in the pores of the mesoporous carbon is the same as or larger than the average particle diameter D2 of the platinum particles or the platinum alloy particles supported outside the pores of the mesoporous carbon, and
the average particle diameter D1 and the average particle diameter D2 are each independently 2 nm or more and 8 nm or less.

The platinum or platinum alloy supporting rate comprised in the platinum or platinum alloy-supported carbon catalyst can be determined, for example, by dissolving a metal component comprised in the platinum particles or platinum alloy particles from the platinum or platinum alloy-supported carbon catalyst using aqua regia, and then determining the quantity of the metal ions in the solution by using an inductively coupled plasma (ICP) atomic emission spectroscope.

The platinum or platinum alloy supporting rate in the platinum or platinum alloy-supported carbon catalyst is 30% or more and 70% or less per total weight of the catalyst on a weight basis. By setting the carried density of the platinum particles or platinum alloy particles to the range described above, the thickness of the electrode catalyst layer can be controlled to be suitably applied for proton transfer, gas diffusion, and draining of generated water, during electrode catalyst layer formation.

The platinum or platinum alloy supporting rate in the platinum or platinum alloy-supported carbon catalyst is preferably 35% or more and 60% or less per total weight of the catalyst on a weight basis. The supporting rate is more preferably 40% or more and 55% or less per total weight of the catalyst on a weight basis.

The total weight of the platinum particles or platinum alloy particles supported outside the pores of the mesoporous carbon with respect to the total weight (that is, the total weight of the platinum particles or platinum alloy particles supported inside and outside the pores of the mesoporous carbon) of the platinum particles or platinum alloy particles supported on the mesoporous carbon is from 60 to 90%. Since the platinum particles or the platinum alloy particles are supported in the pores of the carbon support, a contact area with an ionomer can be reduced, whereby poisoning of the platinum particles or the platinum alloy particles by a sulfonic acid group of the ionomer can be reduced, and high initial activity can be expected to be exhibited. However, it is necessary to suitably adjust the supporting ratio between the inside of the pores and the outside of the pores from the viewpoint of material transport properties such as protons and a reaction gas, and the total weight of the platinum particles or the platinum alloy particles supported outside the pores of the mesoporous carbon is from 60 to 90% with respect to the total weight of the platinum particles or the platinum alloy particles supported on the mesoporous carbon.

The total weight of the platinum particles or the platinum alloy particles supported outside the pores of the mesoporous carbon with respect to the total weight of the platinum particles or the platinum alloy particles supported on the mesoporous carbon is preferably 80% or less. Furthermore, the total weight is more preferably 70% or less.

In the catalyst according to the present invention, the average particle diameter D1 of the platinum particles or the platinum alloy particles may be 2.5 nm or more and 8 nm or less,
the average particle diameter D2 of the platinum particles or the platinum alloy particles may be 2.3 nm or more and 7.3 nm or less, and
D1/D2 may be from 1.0 to 2.1.

In a fuel cell operating environment accompanied by potential fluctuation, platinum particles having a small particle size are preferentially dissolved and reprecipitated on a surface of platinum particles having a large particle size, so that the platinum particles are coarsened, and the catalytically active component is deteriorated. In order to suppress elution of the platinum particles or platinum alloy particles supported in pores which are hardly subjected to ionomer poisoning and exhibit high activity from the inside of the pores to the outside of the pores, it is preferable that the average particle diameter D1 ≥ the average particle diameter D2. Here, the average particle diameter D1 is the average particle diameter of the platinum particles or platinum alloy particles supported in the pores of the mesoporous carbon, and the average particle diameter D2 is the average particle diameter of the platinum particles or platinum alloy particles supported outside the pores.

It is more preferable that the average particle diameter D1 (platinum particles or platinum alloy particles in pores) of the platinum particles or platinum alloy particles is larger than the average particle diameter D2 (platinum particles or platinum alloy particles outside pores) of the platinum particles or platinum alloy particles.

D1/D2 may be from 1.0 to 2.1. D1/D2 is preferably from 1.1 to 1.8.

When the average particle diameter of the platinum particles or platinum alloy particles is within the above range, both the initial activity and durability can be achieved. When the average particle diameter of the platinum particles or the platinum alloy particles is smaller than the above range, an active surface area increases, and the initial activity is expected to be improved; however, coarsening due to dissolution and reprecipitation of the platinum particles or the platinum alloy particles is likely to proceed, and durability is deteriorated. On the other hand, when the average particle diameter of the platinum particles or the platinum alloy particles is larger than the above range, coarsening due to dissolution/reprecipitation and moving aggregation of the platinum particles or the platinum alloy particles hardly proceed; however, the initial activity decreases due to a low active surface area of the platinum particles or the platinum alloy particles.

By selectively supporting the platinum particles or platinum alloy particles supported in the pores that suppress ionomer poisoning and exhibit high activity and the platinum particles or platinum alloy particles supported outside the pores excellent in material transport properties, performance is adjusted, and high initial activity is exhibited. In addition, by making the average particle diameter of the platinum particles or platinum alloy particles supported in the pores larger than that of the platinum particles or platinum alloy particles supported outside the pores, deterioration due to elution of the platinum particles or platinum alloy particles in an operating environment is suppressed, and the durability is enhanced.

The catalytically active component comprised in the platinum or platinum alloy-supported carbon catalyst of the present invention is platinum (Pt) or a platinum alloy. Examples of such one or more types of additional metals forming the platinum alloy in the platinum alloy include titanium (Ti), chromium (Cr), manganese (Mn), iron (Fe), cobalt (Co), nickel (Ni), copper (Cu), gallium (Ga), yttrium (Y), zirconium (Zr), molybdenum (Mo), lanthanum (La), cerium (Ce), gadolinium (Gd), hafnium (Hf), tantalum (Ta), ruthenium (Ru), iridium (Ir), palladium (Pd), osmium (Os), and rhodium (Rh). In a case where the platinum alloy particles comprised in an electrode catalyst for a fuel cell according to the present invention comprise the catalyst metal, an electrode catalyst having a high activity and a high durability can be provided.

### Examples

The present invention will be disclosed in more detail below with reference to Examples and Comparative Examples. The present invention is not limited to these Examples.

### (Example 1)

### 1. Preparation of in-pore platinum-supported carbon (in-pore first platinum particle supporting step)

As a support, mesoporous carbon having a pore volume of 3.5 cm³/g was used. To 31.8 g of the mesoporous carbon support, 128.0 g of a dinitrodiamine platinum nitric acid aqueous solution containing 8.3 wt.% of platinum was added, and the mixture was mixed for 30 minutes using a kneader to prepare a platinum-supported carbon slurry. The prepared slurry was dried at 200°C under reduced pressure for 12 hours using a vacuum dryer to prepare a solidified product. Thereafter, the solidified product was heat-treated at 200°C for 2 hours in an atmosphere furnace under a flow of 4.0% hydrogen/nitrogen to reduce dinitrodiamine platinum. Thereafter, the firing temperature T1 (inside) was set to 600°C under a flow of nitrogen, and firing was performed for 1 hour to grow platinum particles, thereby preparing carbon in which 25 wt.% of first platinum particles were supported in the pores.

### 2. Preparation of in-pore and exterior-pore platinum-supported carbon catalyst (extra-pore second platinum particle supporting step)

10.0 g of 25 wt.% in-pore first platinum particle-supported carbon was suspended in 150 g of 0.1 M nitric acid, and 48.1 g of a dinitrodiamine platinum nitric acid aqueous solution comprising 8.3 wt.% of platinum, 4.0 g of ethanol, and 7.5 g of L-ascorbic acid were added thereto to form a mixture. By heating this mixture at 90°C for 1 hour using a reflux reactor, dinitrodiamine platinum was subjected to liquid phase reduction, and the platinum particles were supported outside the pores of the carbon support.

The mixture was then allowed to cool to room temperature, and platinum-supported carbon in the mixture was filtered off, then washed, and dried at 60°C for 12 hours.

After drying, heat treatment was performed at 200°C for 2 hours in an atmosphere furnace under a flow of 4.0% hydrogen/nitrogen to thermally decompose the residue of the attached reducing agent (L-ascorbic acid).

Next, firing was performed at the firing temperature T2 (outside) under a flow of nitrogen of 600°C for 1 hour to grow platinum particles supported outside the pores.

As a result, a carbon catalyst was obtained in which 47 wt.% of the first/second platinum particles were supported inside and outside the pores. The total weight of the second platinum particles supported outside the pores of the mesoporous carbon with respect to the total weight of the first/second platinum particles supported on the mesoporous carbon was 63%.

### (Example 2)

A platinum-supported carbon catalyst was obtained in the same manner as in Example 1 except that the nitrogen firing temperature T1 (inside) in the in-pore first platinum particle supporting step was changed from 600°C to 700°C.

### (Example 3)

A platinum-supported carbon catalyst was obtained in the same manner as in Example 1 except that the nitrogen firing temperature T1 (inside) in the in-pore first platinum particle supporting step was changed from 600°C to 900°C.

### (Example 4)

A platinum-supported carbon catalyst was obtained in the same manner as in Example 1 except that the nitrogen firing temperature T1 (inside) in the in-pore first platinum particle supporting step was changed from 600°C to 1000°C.

### (Example 5)

A platinum-supported carbon catalyst was obtained in the same manner as in Example 1 except that the carrier used was changed to mesoporous carbon having a pore volume of 4.5 cm³/g.

### (Example 6)

To 5.02 g of the in-pore and exterior-pore platinum-supported carbon catalyst of Example 1, an aqueous cobalt nitrate solution obtained by dissolving 2.48 g of cobalt (II) nitrate hexahydrate in 5.18 g of water was added, and the mixture was mixed for 30 minutes using a kneader to prepare a slurry. The prepared slurry was dried at 200°C under reduced pressure for 12 hours using a vacuum dryer to prepare a solidified product. This solidified product was reduced in an atmosphere furnace at 200°C for 2 hours under a flow of 4.0% hydrogen/nitrogen, and fired at 800°C for 1 hour under a flow of nitrogen to perform an alloying treatment. Thereafter, in order to remove excessive cobalt by acid washing, 80 g of 1 M nitric acid was added, the mixture was heated at 90°C for 1 hour, and allowed to cool to room temperature, and then a black powder was filtered off, then washed, and dried at 80°C for 12 hours to prepare 5.28 g of a platinum cobalt-supported carbon catalyst.

### (Comparative Example 1)

To 10.0 g of the mesoporous carbon support having a pore volume of 3.5 cm³/g, 54.2 g of a dinitrodiamine platinum nitric acid aqueous solution containing 8.3 wt.% of platinum was added, and the mixture was mixed for 30 minutes using a kneader to prepare a platinum-supported carbon slurry. The prepared slurry was dried at 200°C under reduced pressure for 12 hours using a vacuum dryer to prepare a solidified product. Thereafter, the solidified product was heat-treated at 200°C for 2 hours in an atmosphere furnace under a flow of 4.0% hydrogen/nitrogen to reduce dinitrodiamine platinum. Thereafter, platinum particles were grown by firing at 200°C for 2 hours under a flow of nitrogen. As mentioned above, carbon in which 31 wt.% of the first platinum particles were supported in the pores was obtained. To 12.0 g of carbon having 31 wt.% of first platinum particles supported in the pores, 43.6 g of a dinitrodiamine platinum nitric acid aqueous solution containing 8.3 wt.% of platinum was added again in the same procedure, and kneading, drying, reduction heat treatment, and firing were performed to prepare a carbon catalyst having 47 wt.% of first platinum particles supported in the pores.

### (Comparative Example 2)

10.0 g of a mesoporous carbon carrier having a pore volume of 3.5 cm³/g was suspended in 400 g of 0.1 M nitric acid, and 106.6 g of a dinitrodiamine platinum nitric acid aqueous solution containing 8.3 wt.% of platinum, 10.3 g of ethanol, and 16.0 g of L-ascorbic acid were added thereto to form a mixture. By heating this mixture at 90°C for 1 hour using a reflux reactor, dinitrodiamine platinum was subjected to liquid phase reduction, and the platinum particles were supported outside the pores of the carbon support.

The mixture was then allowed to cool to room temperature, and platinum-supported carbon in the mixture was filtered off, then washed, and dried at 60°C for 12 hours.

After drying, heat treatment was performed at 200°C for 2 hours in an atmosphere furnace under a flow of 4.0% hydrogen/nitrogen to thermally decompose the residue of the attached reducing agent (L-ascorbic acid).

Next, firing was performed at 200°C for 2 hours under a flow of nitrogen to grow the platinum particles supported outside the pores. As a result, a carbon catalyst was obtained in which 47 wt.% of the second platinum particles were supported outside the pores.

The following physical properties were evaluated for each of the platinum or platinum alloy-supported carbon catalysts of Examples and Comparative Examples. The results are shown in Table 1.

### [Measurement of particle size distribution of platinum particles or platinum alloy particles of platinum or platinum alloy-supported carbon catalyst]

A particle size distribution of the platinum particles or the platinum alloy particles was measured under the following measurement conditions by using a CuKα ray as a radiation source and a small-angle scattering measuring device (Nano-Viewer available from Rigaku Corporation).

### X-ray small angle scattering measurement (SAXS) Measurement conditions

Tube: CuKα ray
Output: 40 kV - 30 mA
Slit: first slit 0.4 mm, second slit 0.2 mm, third slit 0.45 mm
Measurement method: permeation method
Detector: HyPix-3000
Camera length: 680 mm
Exposure time: 15 minutes
Temperature: room temperature

### [Measurement of metal specific surface area of platinum particles or platinum alloy particles of platinum or platinum alloy-supported carbon catalyst]

A metal specific surface area of the platinum particles or the platinum alloy particles was measured by a pulse method using a carbon monoxide gas, using a metal dispersibility measuring apparatus (BELMETAL3 available from MicrotracBEL Corp.). The metal specific surface area of catalyst particles was determined by an adsorbed amount of carbon monoxide.

### [Measurement of BET specific-surface-area of carbon support of platinum or platinum alloy-supported carbon catalyst]

For the BET specific surface area (m²/g), a nitrogen adsorption isotherm was obtained by a gas adsorption method using a nitrogen gas, using an automatic specific surface area/pore distribution measuring apparatus (BELSORP-mini 2 available from MicrotracBEL Corp.), and the specific surface area was determined by a multipoint method based on a BET method.

| | Platinum or platinum alloy-supporting rate | Ratio of extra-pore platinum particles or platinum alloy particles | Average particle diameter D1 [nm] | Average particle diameter D2 [nm] | D1/D2 | Metal specific-surface-area [m²g⁻¹] | BET specific-surface-area [m²g⁻¹] |
|---|---|---|---|---|---|---|---|
| Example 1 | Pt: 46% | 63% | 3.5 | 3.5 | 1.0 | 76 | 354 |
| Example 2 | Pt: 46% | 63% | 3.8 | 3.5 | 1.1 | 80 | 360 |
| Example 3 | Pt: 47% | 63% | 5.5 | 3.5 | 1.6 | 69 | 350 |
| Example 4 | Pt: 47% | 63% | 7.1 | 3.4 | 2.1 | 57 | 337 |
| Example 5 | Pt: 46% | 63% | 3.1 | 3.1 | 1.0 | 100 | 630 |
| Example 6 | Pt: 43% | 63% | 4.4 | 4.4 | 1.0 | 66 | 290 |
| | Co: 4.8% | | | | | | |
| Comparative Example 1 | Pt: 46% | 0% | 3.9 | - | - | 94 | 314 |
| Comparative Example 2 | Pt: 47% | 100% | - | 3.8 | - | 78 | 339 |

In Example 1, the firing temperatures T1 (inside) and T2 (outside) were both 600°C, and the average particle diameter D1 of the in-pore first platinum particles and the average particle diameter D2 of the extra-pore second platinum particles were 3.5 nm, which were about the same in size.

In Examples 2 to 4, the treatment was performed such that the firing temperature T1 (inside) was higher than T2 (outside), the average particle diameter D1 of the in-pore first platinum particles was from 3.8 to 7.1 nm, the average particle diameter D2 of the extra-pore second platinum particles was from 3.4 to 3.5 nm, and the average particle diameter D1 of the in-pore first platinum particles was larger.

In Example 5, mesoporous carbon having a pore volume different from that of Examples 1 to 4 was used. As in Example 1, the treatment was performed such that the firing temperatures T1 (inside) and T2 (outside) were both 600°C, so that the average particle diameter D1 of the in-pore first platinum particles and the average particle diameter D2 of the extra-pore second platinum particles were 3.1 nm, which were about the same in size.

In Example 6, platinum cobalt-supported carbon was adjusted, and the average particle diameter D1 of the in-pore first catalyst particles and the average particle diameter D2 of the extra-pore second catalyst particles were 4.4 nm, which were about the same in size.

In Comparative Example 1, the in-pore supporting step by the impregnation method was repeated twice to prepare a platinum-supported carbon catalyst. The average particle diameter D1 of the in-pore first platinum particles was 3.9 nm.

In Comparative Example 2, a platinum-supported carbon catalyst was prepared by the extra-pore supporting step by a liquid phase reduction method. The average particle diameter D2 of the extra-pore second platinum particles was 3.8 nm.

The metal specific surface areas of Examples and Comparative Examples were from 57 to 100 m²g⁻¹. The BET specific surface areas of Examples and Comparative Examples were from 290 to 630 m²g⁻¹.

For the platinum or platinum alloy-supported carbon catalysts of Examples and Comparative Examples, a membrane electrode assembly for single cell evaluation of a solid polymer fuel cell was prepared by the following method.

### 1. Preparation of electrode

Using a planetary ball mill, 0.8 g of each of the platinum or platinum alloy-supported carbon catalysts of Examples and Comparative Examples, 4.16 g of pure water, 1.60 g of an ionomer (Nafion DE2020CS, available from Chemours), 2.43 mL of 2-propanol (available from FUJIFILM Wako Pure Chemical Corporation), 1.88 mL of 1-propanol (available from FUJIFILM Wako Pure Chemical Corporation), and 0.72 mL of propylene glycol (available from FUJIFILM Wako Pure Chemical Corporation) were mixed and dispersed for 1 hour, and then degassed for 5 minutes by a mixer, and thus a cathode catalyst slurry was formed. This electrode catalyst slurry was applied on one face of a PTFE sheet (NAFLON (trade name) sheet, available from NICHIAS Corporation; thickness: 200 µm) using a doctor blade and dried in vacuum at 120°C for 60 minutes, and thus a cathode catalyst layer was formed on a PTFE sheet.

For the anode catalyst layer, FC-I2 (IFPC 40-II available from ISHIFUKU Metal Industry Co., Ltd.), which was a reference catalyst of Catalysis Society of Japan Fuel Cell Related Catalyst Division, was used.

### 2. Preparation of MEA

The two sheets of electrode catalyst layer-formed PTFE sheets that were prepared as mentioned above were layered sandwiching a polymer electrolyte membrane (Nafion NR-211, available from Chemours; 200 mm × 200 mm square) in a manner that sides on which the electrode catalyst layers were formed were facing inside, and then hot-pressed at 130°C and at a pressure of 1.5 K/N using a precision heating and pressure device (CYPM, Sintokogio, Ltd.) for 10 minutes. After cooling, only the PTFE sheets were released, and thus an assembly in which the electrode catalyst layers were transferred to the polymer electrolyte membrane was produced. At this time, the transfer rate of the electrode catalyst layers from the PTFE sheets to the polymer electrolyte was 100%, and the platinum weight per 1 cm² area of one face of the electrode catalyst layer on the polymer electrolyte membrane was 0.30 mg.

Then, the assembly prepared as mentioned above was sandwiched using two sheets of gas diffusion layers (GDL 28BC, available from SGL; 100 mm × 100 mm square), then a sealing material (NAFLON (trade name) sheet, available from NICHIAS Corporation; laminate of a thickness of 150 µm and a thickness of 80 µm) were arranged on a peripheral part of the electrode catalyst layers and the gas diffusion layers, and thus an MEA was formed.

Thereafter, on the prepared MEA, a current collector provided with a gold-plated gas flow pass was arranged and fastened by being sandwiched by end plates made of stainless steel in a manner that a predetermined surface pressure was achieved, and thus a single cell of a solid polymer fuel cell was produced.

The following power generation evaluation was evaluated for MEA using the platinum or platinum alloy-supporting carbon catalysts of Examples and Comparative Examples. The results are presented in Table 2.

### [Measurement of initial activity of MEA using platinum or platinum alloy-supported carbon catalyst]

Based on "NEDO PEFC cell evaluation analysis protocol, March 2022 edition" of New Energy and Industrial Technology Development Organization (NEDO), I-V measurement was performed by using a fuel cell power generation evaluation device (available from Chino Corporation) and an electronic load device (PLZ164WA, available from Kikusui Electronics Corp.), and the mass activity was calculated based on the electric current density at 0.85 V and the supported amount of platinum, and thus the initial activity was determined.

### [Measurement of durability of MEA using platinum or platinum alloy-supported carbon catalyst]

Based on the potential cycle (load response) test method described in "NEDO PEFC cell evaluation analysis protocol, March 2022 edition" of New Energy and Industrial Technology Development Organization (NEDO), a load response simulated potential cycle test to accelerate the deterioration of platinum particles or platinum alloy particles of a platinum or platinum alloy-supported carbon catalyst was performed by using a fuel cell power generation evaluation device (available from Chino Corporation) and a potentio-galvanostat (PGSTAT128N, available from Metrohm AG), and the mass activity after a durability test was calculated based on the electric current density at 0.85 V and the supported amount of platinum after 30000 cycles to evaluate the durability.

In the initial activity, the case of 800 Ag⁻¹ or more was evaluated as ⊚, and the case of 300 Ag⁻¹ or more and less than 800 Ag⁻¹ was evaluated as ○. In the activity after endurance, the case of 300 Ag⁻¹ or more was evaluated as ⊚, the case of 100 Ag⁻¹ or more and less than 300 Ag⁻¹ was evaluated as ○, and the case of less than 100 Ag⁻¹ was evaluated as ×.

| | Initial activity Mass activity @0.85 V in Air | Durability Mass activity @0.85 V after 30000 cycles in Air | Initial activity | Activity after endurance |
|---|---|---|---|---|
| | [Ag⁻¹] | [Ag⁻¹] | | |
| Example 1 | 802 | 102 | ⊚ | ○ |
| Example 2 | 836 | 267 | ⊚ | ○ |
| Example 3 | 809 | 423 | ⊚ | ⊚ |
| Example 4 | 353 | 315 | ○ | ⊚ |
| Example 5 | 535 | 450 | ○ | ⊚ |
| Example 6 | 918 | 139 | ⊚ | ○ |
| Comparative Example 1 | 498 | 52 | ○ | × |
| Comparative Example 2 | 371 | 47 | ○ | × |

Examples 1 to 6 were each a platinum or platinum alloy-supported carbon catalyst in which the total weight of the second platinum particles or platinum alloy particles supported outside the pores of the mesoporous carbon with respect to the total weight of the first/second platinum particles or platinum alloy particles supported inside and outside the pores of the mesoporous carbon in two steps was adjusted to from 60 to 90%, and the average particle diameter D1 of the platinum particles or platinum alloy particles supported inside the pores of the mesoporous carbon was the same as or larger than the average particle diameter D2 of the platinum particles or platinum alloy particles supported outside the pores, the initial mass activity was 300 Ag⁻¹ or more, and the mass activity after 30000 cycles was 100 Ag⁻¹ or more, and the catalyst had good initial activity and durability.

Comparative Example 1 was a platinum-supported carbon catalyst prepared by repeating only the in-pore supporting step twice, and the initial mass activity was 498 Ag⁻¹, which was a good initial activity. On the other hand, the mass activity after 30000 cycles was 52 Ag⁻¹ or more, which was a low endurance.

Comparative Example 2 is a platinum-supported carbon catalyst prepared only by the liquid phase reduction method as the extra-pore supporting step, and the initial mass activity was 371 Ag⁻¹, which was a good initial activity. On the other hand, the mass activity after 30000 cycles was 47 Ag⁻¹ or more, which was a low endurance.

## Claims

1. A platinum or platinum alloy-supported carbon catalyst in which platinum particles or platinum alloy particles are supported on mesoporous carbon, wherein
a platinum or platinum alloy supporting rate in the catalyst is 30% or more and 70% or less per total weight of the catalyst on a weight basis,
a total weight of the platinum particles or platinum alloy particles supported outside pores of the mesoporous carbon relative to the total weight of the platinum particles or platinum alloy particles is from 60 to 90%,
an average particle diameter D1 of the platinum particles or platinum alloy particles supported in the pores of the mesoporous carbon is the same as or larger than an average particle diameter D2 of the platinum particles or the platinum alloy particles supported outside the pores of the mesoporous carbon, and
the average particle diameter D1 and the average particle diameter D2 are each independently 2 nm or more and 8 nm or less.

2. The platinum or platinum alloy-supported carbon catalyst according to claim 1, wherein the average particle diameter D1 is 2.5 nm or more and 8 nm or less, the average particle diameter D2 is 2.3 nm or more and 7.3 nm or less, and D1/D2 is from 1.0 to 2.1.

3. A method for producing a platinum-supported carbon catalyst, the method comprising:
an in-pore supporting step of supporting platinum in pores of a mesoporous carbon carrier, the in-pore supporting step comprising a step of impregnating a mesoporous carbon support with a platinum compound-containing aqueous solution, a step of drying under reduced pressure the mesoporous carbon support impregnated with the platinum compound-containing aqueous solution prepared in the impregnation step, and a step of heat-treating the mesoporous carbon support dried under reduced pressure, prepared in the step of drying under reduced pressure, in a reducing atmosphere; and
an extra-pore supporting step of supporting platinum particles outside the pores of the mesoporous carbon carrier, the extra-pore supporting step comprising a step of suspending the mesoporous carbon support in which platinum is supported in the pores after the in-pore supporting step in an aqueous solution, and a step of mixing the suspension, the platinum compound-containing aqueous solution, and a liquid comprising a reducing agent and reducing the platinum compound.

4. The method for producing a platinum-supported carbon catalyst according to claim 3, wherein the in-pore supporting step comprises a step of adding a dinitrodiamine platinum nitric acid aqueous solution to the mesoporous carbon support and mixing them to prepare a platinum-supported carbon slurry, a step of drying the prepared slurry at a predetermined temperature under reduced pressure to prepare a solidified product, a step of performing heat treatment in a reducing atmosphere to reduce dinitrodiamine platinum, and a step of firing (firing temperature T1) in an inert gas atmosphere to grow platinum particles; and the extra-pore supporting step comprises a step of suspending the mesoporous carbon support in which platinum is supported in the pores after the in-pore supporting step in a nitric acid aqueous solution, and heating and stirring the suspension, a dinitrodiamine platinum nitric acid aqueous solution, and a liquid comprising L-ascorbic acid at from 80°C to 100°C for from 30 minutes to 5 hours to support the platinum particles outside the pores of the carbon support, and a step of filtering platinum-supported carbon having the platinum particles supported outside the pores of the carbon carrier in the supporting step, then washing the platinum-supported carbon, drying the platinum-supported carbon, and then firing (firing temperature T2) the platinum-supported carbon in an inert gas atmosphere to grow the platinum particles.

5. The method for producing a platinum alloy-supported carbon catalyst according to claim 3 or 4, further comprising a step of adding an aqueous solution comprising a compound of a metal to be alloyed with the platinum to the platinum-supported carbon catalyst and mixing them to prepare a slurry, a step of heating and drying the prepared slurry under reduced pressure to prepare a solidified product, and an alloying step of firing the solidified product in an inert gas atmosphere after pretreating and firing the solidified product in a reducing atmosphere and performing an alloying treatment.

6. The method for producing a platinum or platinum alloy-supported carbon catalyst according to claim 3 or 4, wherein each of the firing temperature T1 and the firing temperature T2 is set to a predetermined temperature to control an average particle diameter D1 of the platinum particles and an average particle diameter D2 of the platinum particles.

7. A membrane electrode assembly for a solid polymer fuel cell, wherein the platinum or platinum alloy-supported carbon catalyst mentioned in claim 1 is contained in an electrode.

8. A solid polymer fuel cell, wherein the platinum or platinum alloy-supported carbon catalyst mentioned in claim 1 is contained in an electrode of a membrane electrode assembly.
